Europäisches Patentamt

European Patent Office

Office européen des brevets

(11) Publication number: **0 481 485 A2**

# EUROPEAN PATENT APPLICATION

(21) Application number: **91117748.3**

(22) Date of filing: **17.10.91**

(51) Int. Cl.5: **G06F 1/04**

(30) Priority: **17.10.90 JP 278270/90**

(43) Date of publication of application:
**22.04.92 Bulletin 92/17**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Mori, Takehiko, c/o NEC Corporation**
**7-1, Shiba 5-chome**
**Minato-ku, Tokyo(JP)**

(74) Representative: **Betten & Resch**
**Reichenbachstrasse 19**
**W-8000 München 5(DE)**

(54) Microcomputer having logic circuit for prohibiting application of subclock to selected internal unit.

(57) A microcomputer includes a plurality of units operating in synchronism with a first internal clock or a second internal clock depending on operation modes of the microcomputer. The clock rate of the second internal clock is lower than that of the first internal clock. The microcomputer is provided with a clock control circuit which precedes at least one unit. The clock control circuit prevents the second internal clock from being applied to the unit and allows the first internal clock to be applied to the unit.

FIG. 3

EP 0 481 485 A2

# BACKGROUND OF THE INVENTION

## Field of the Invention

The present invention relates to a microcomputer which selectively acquires one of two external reference clocks (viz., main clock and subclock) depending on the mode of operation, and more specifically to such a microcomputer which features inclusion of a logic circuit for preventing an internal subclock from being applied to a selected unit or units of the microcomputer.

## Description of the Prior Art

It is known in the art that a certain type microcomputer selectively acquires, depending on the operation modes thereof, one of the two reference clocks (viz., main clock and subclock) applied from an external clock source. The clock rate of the subclock is considerably lower than that of the main clock (e.g., more than 200 times lower).

Such a microcomputer has found applications in a video tape recorder, a date/time recording device of a still picture camera, etc. wherein a timer unit has to be kept alive during periods when the microcomputer does not operate under a normal mode. This type microcomputer selects the main clock under the normal operation while selecting the subclock other than the normal operation for functioning the timer unit included therein.

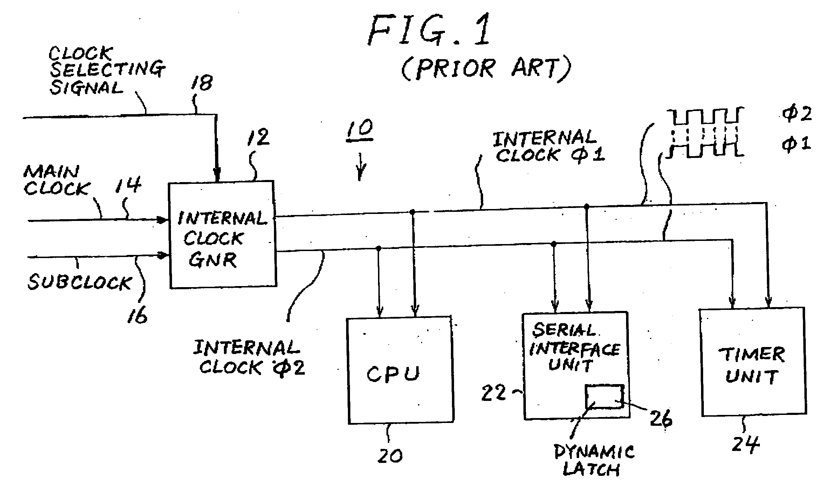

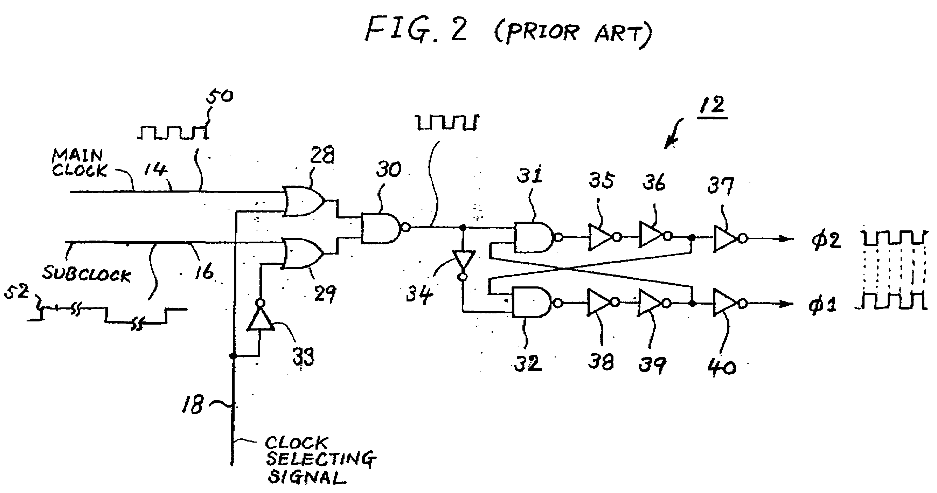

Before turning to the present invention it is deemed preferable to describe a known microcomputer of the above-mentioned type with reference to Figs. 1 and 2. It should be noted that the Fig. 1 arrangement is presented in a very simplified manner and does not illustrate address and data buses, data inputs and outputs, etc., which are not relevant to the instant invention.

As shown in Fig. 1, a microcomputer 10 includes an internal clock generator 12 which receives a main clock 14, a subclock 16 and a clock selecting signal 18, all of which are supplied from external circuits (not shown). One example of the circuit configuration of the internal clock generator 12 is shown in Fig. 2. As mentioned above, the clock rate of the main clock 14 (e.g., 6 MHz to 10 MHz) is much higher than that of the subclock 16 (e.g., 32 KHz). The internal clock generator 12 selects one of the two reference clocks 14, 16 using the clock selecting signal 18, and issues two kinds of internal clocks $\phi 1$ and $\phi 2$.

Each of the clock rates of the internal clocks $\phi 1$ and $\phi 2$ is equal to that of the selected external reference clock (viz., 14 or 16). Further, the clock rates of $\phi 1$ and $\phi 2$ equal with each other but have a mirror image relationship as schematically shown in Fig. 1. so-called two-phase clocks $\phi 1$, $\phi 2$ are

well known in the technical field of a microcomputer and hence further descriptions thereof are deemed unnecessary.

The microcomputer 10 further includes a central processing unit (CPU) 20, a serial interface unit 22 and a timer unit 24 as shown.

When the microcomputer 10 operates under the normal mode (or main clock mode), the clock selecting signal 18 assumes a low level (logic 0). In this instance, the internal clock generator 12 selects the main clock 14 and issues the internal clocks $\phi 1$ and $\phi 2$ each of which has the same clock rate as the main clock 14 and is applied to the units 20, 22 and 24.

On the other hand, in the event that the microcomputer 10 operates under the subclock mode wherein only the timer unit 24 is required to operate, the clock selecting signal 18 assumes a high level (logic 1). Thus, the internal clock generator 12 selects the external subclock 16. Each of the internal clocks $\phi 1$ and $\phi 2$, issued from the clock generator 12, equals that of the external subclock 16. The internal clocks $\phi 1$, $\phi 2$ are applied to the units 20, 22 and 24.

The operation of the conventional internal clock generator 12 will be described in brief with reference to Fig. 2.

As shown in Fig. 2, the clock generator 12 includes two OR gates 28-29, three NAND gates 30-32, eight inverters 33-40, all of which are coupled as shown. The waveforms of the main clock 18 and the subclock 16, which are applied to the clock generator 12, are denoted by numerals 50, 52, respectively. In the event that the microcomputer 10 (Fig. 1) operates under the normal mode, the clock selecting signal 18 assumes a logic 0. The inverter 33 applies a logic 1 to the gate 29 during the normal mode and hence, the output of the OR gate 29 is fixed to a logic 1. Thus, the subclock 16 is blocked at the OR gate 29. On the other hand, the main clock 14 appears at the output of the NAND gate 30 but the waveform thereof is inverted.

It is assumed that the inverter 34 is initially supplied with a logic 1 level, then the NAND gate 32 issues a logic 1. However, the output of NAND gate 31 is uncertain at this time point. Nevertheless, the inverter 39 issues a logic 1 in this case and thus the NAND gate 31 assuredly assumes a logic 0. Accordingly, the inverter 37 output a logic 1 while the inverter 40 a logic 0. It is understood that the waveforms of the internal clocks $\phi 1$ and $\phi 2$ are schematically shown in Fig. 2. It should be noted that a delay time is not considered in the above discussion for the convenience of description. The purpose of the provision of the logic elements 31, 32, 35-40, which follow the inverter 34, is such that the high levels of the internal

clocks $\phi1$, $\phi2$ do not overlap due to an environment temperature change (for example).

The arrangement shown in Fig. 2 is not directly concerned with the present invention and as such, further discussion thereof is deemed unnecessary.

Returning to Fig. 1, according to the above-mentioned known technique, all of the units 20, 22 and 24 of the microcomputer 10 are constantly supplied with the internal subclock under the subclock mode irrespective of the fact that units 20, 22 do not require a clock. Consequently, the prior art has suffered from the problem that the power consumption of the microprocessor 10 is not effectively reduced.

In addition to the above difficulty, the prior art may encounter another problem if a dynamic latch 26 is provided in the serial interface unit 22 (for example). That is, if a time duration of the low level of the internal subclock $\phi1$ ($\phi2$) is longer than the time duration for which the dynamic latch 26 can hold electric charges, the dynamic latch 26 is unable to retain data and induces an erroneous operation of the microcomputer 10.

SUMMARY OF THE INVENTION

It is an object of the present invention to provide a microcomputer wherein an internal subclock is prevented from being applied to a unit or units which do not require a clock signal under a subclock mode.

Another object of the present invention is to provide a microcomputer wherein a dynamic latch provided therein is effectively supplied with sufficient electric charges during a subclock mode.

In brief, the above objects are achieved by a method and arrangement wherein a microcomputer includes a plurality of units operating in synchronism with a first internal clock or a second internal clock depending on operation modes of the microcomputer. The clock rate of the second internal clock is lower than that of the first internal clock. The microcomputer is provided with a clock control circuit which precedes at least one unit. The clock control circuit prevents the second internal clock from being applied to the unit and allows the first internal clock to be applied to the unit.

More specifically, a first aspect of the present invention is deemed to come in a microcomputer which includes a plurality of units operating in synchronism with a first internal clock or a second internal clock depending on operation modes of the microcomputer, the clock rate of the second internal clock being lower than that of the first internal clock, the microcomputer comprising: a clock control circuit which precedes at least one of the units, the clock control circuit preventing the second internal clock from being applied to the at least one of the units and allowing the first internal clock to be applied to the at least one of the units.

A second aspect of the present invention is deemed to come in a microcomputer which includes a plurality of units operating in synchronism with a first internal clock or a second internal clock depending on operation modes of the microcomputer, the clock rate of the second internal clock being lower than that of the first internal clock, the microcomputer comprising: a clock generator which receives a first and second external clocks, the clock generator issuing the first and second internal clocks using the first and second external clocks, respectively, in response to a clock selecting signal applied thereto from an external circuit; and a clock control circuit which precedes at least one of the units, the clock control circuit preventing the second internal clock from being applied to the at least one of the units in response to the clock selecting signal, and allowing the first internal clock to be applied to the at least one of the units in response to the clock selecting signal.

A third aspect of the present invention is deemed to come in a microcomputer which operates in synchronism with one of first and second groups of internal clocks depending on operation modes thereof, the clock rate of each of the first group of internal clocks being higher than that of each of the second group of internal clocks, the microcomputer including first and second units wherein the first unit operates in synchronism with the first group of internal clocks while the second unit operates in synchronism with either of the first and second groups of internal clocks, the microcomputer comprising: a clock generator which receives a clock selecting signal and the first and second external clocks, the clock selecting signal assuming first and second logic levels, the clock generator selecting the first external clock in response to the clock selecting signal assuming the first logic level and issuing the first group of internal clocks, and selecting the second external clock in response to the clock selecting signal assuming the second logic level and issuing the second group of internal clocks; and a clock control circuit arranged between the clock generator and the first unit, the clock control circuit preventing the second group of internal clocks from being applied to the first unit in response to the clock selecting signal assuming the second logic level, and allowing the first group of internal clocks to be applied to the first unit in response to the clock.

BRIEF DESCRIPTION OF THE DRAWINGS

The features and advantages of the present invention will become more clearly appreciated from the following description taken in conjunction with the accompanying drawings in which:

Fig. 1 is a block diagram showing a known microcomputer arrangement discussed in the opening paragraphs;

Fig. 2 is a logic circuit forming part of the Fig. 1 arrangement;

Fig. 3 is a block diagram showing a first embodiment of the present invention;

Fig. 4 is a logic circuit forming part of the Fig. 3 arrangement; and

Fig. 5 is a block diagram showing a second embodiment of the present invention.

## DETAILED DESCRIPTION OF THE PREFERRED EMBODIMENTS

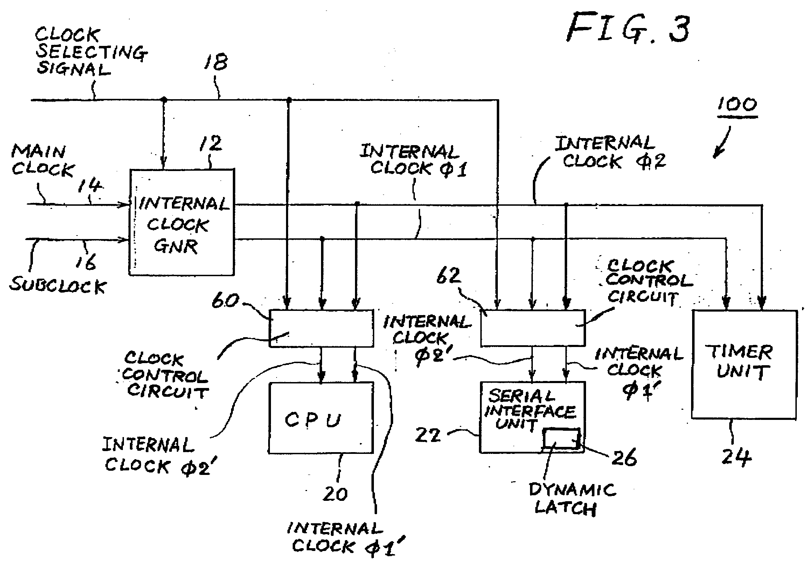

Reference is now made to Fig. 3, wherein a first embodiment of the present invention is shown in block diagram form. The arrangement of Fig. 3 differs from that of Fig. 1 in that: (a) the former arrangement further includes two clock control circuits 60 and 62 which have the same configuration with each other and (b) the clock selecting signal 18 is applied to the circuits 60 and 62 in addition to the internal clock generator 12. The remaining blocks or units 12, 20, 22 and 24 are identical with the corresponding counterparts of Fig. 1 and hence further descriptions will be omitted for brevity.

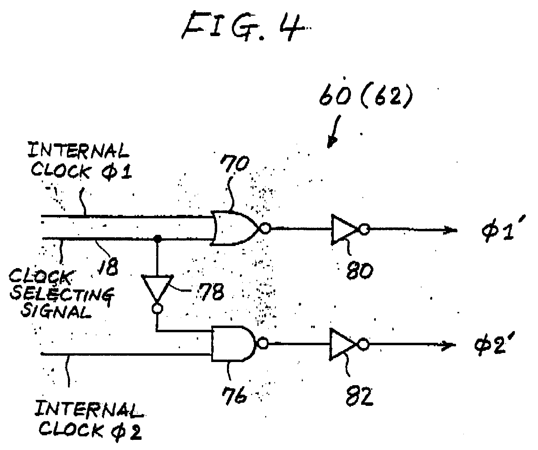

Fig. 4 is a logic circuit of the clock control circuit 60 (or 62), which includes a NOR gate 70, a NAND gate 76 and three inverters 78, 80 and 82.

It is assumed that a microcomputer of Fig. 3, which is denoted by numeral 100, is operating under the normal mode. The clock selecting signal 14 assumes a logic 0 as in the case of the microcomputer 10 of Fig. 1. The NOR gate 70 of the clock control circuit 60 receives the clock selecting signal 12 (logic 0) and, accordingly, it is clearly understood that the output of the inverter 80 is substantially a replica of the internal clock $\phi 1$ which corresponds to the external main clock 14 in this instance. The output of the inverter 80, denoted by $\phi 1'$, is applied to the CPU 20. On the other hand, the NAND gate 76 is supplied with a logic 1 from the inverter 58 and the internal main clock $\phi 2$. Therefore, the output of the inverter 82 is substantially a replica of the internal main clock $\phi 2$. It follows that the clock control circuit 60 (62) allows the internal clocks $\phi 1$ and $\phi 2$ to pass therethrough.

When the microcomputer 100 operates under the subclock mode, the clock selecting signal 18 assumes a logic 1. In this instance, the internal clock $\phi 1$ is substantially a replica of the external subclock 16, while the internal clock $\phi 2$ is substantially the external subclock 16 inverted. It is understood that the output of the inverter 80 (viz., the clock $\phi 1'$) continues to assumes a logic 1, while the output of the inverter 82 (viz., the clock $\phi 2'$) is clamped at logic 0. This means that the internal clocks $\phi 1$, $\phi 2$ (viz, internal subclocks) are not applied to the units 20, 22. Accordingly, the overall power consumption of the microcomputer 100 can effectively be reduced as compared with the arrangement shown in Fig. 1.

Further, in the event that the serial interface 22 is provided with the dynamic latch 26, a high level voltage can be applied to the dynamic latch 26 during the subclock mode. Accordingly, there is no possibility that the content of the latch 26 is destroyed due to the undesirable drain of electric charges therefrom.

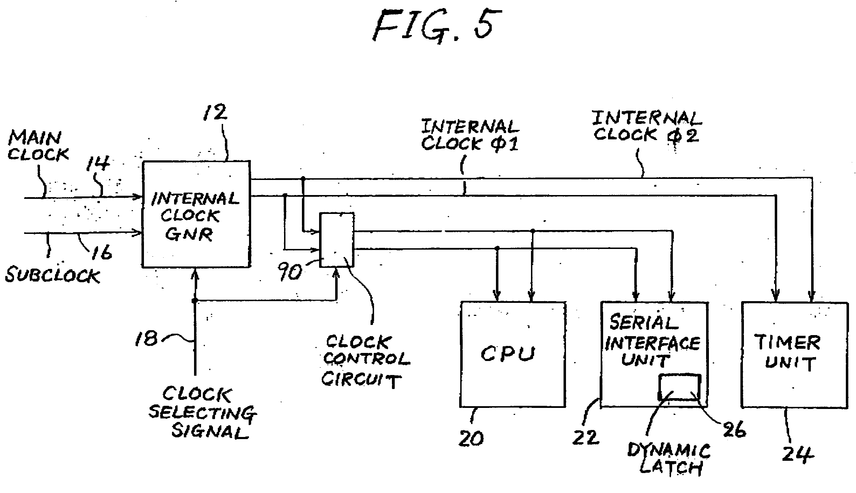

A second embodiment of the present invention will be described with reference to Fig. 5.

The second embodiment includes a clock control circuit 90 in lieu of the clock control circuits 60, 62 of the first embodiment (Fig. 3). The circuit 90 is followed by the units 20, 22. The operations of the Fig. 5 arrangement are identical with those of Fig. 3 arrangement and hence, further discussion of the second embodiment will be omitted.

While the foregoing description describes two embodiments according to the present invention, the various alternatives and modifications possible without departing from the scope of the present invention will be apparent to those skilled in the art.

## Claims

1. A microcomputer which includes a plurality of units operating in synchronism with a first internal clock or a second internal clock depending on operation modes of the microcomputer, the clock rate of the second internal clock being lower than that of the first internal clock, the microcomputer comprising:

   a clock control circuit which precedes at least one of the units, the clock control circuit preventing the second internal clock from being applied to the at least one of the units and allowing the first internal clock to be applied to the at least one of the units.

2. A microcomputer as claimed in claim 1, further comprising:

   a clock generator which receives a first and second external clocks, the clock generator issuing the first and second internal clocks using the first and second external clocks, respectively, in response to a clock selecting signal applied thereto from an external circuit.

3. A microcomputer as claimed in claim 2, wherein the clock selecting signal is also applied to the clock control circuit.

**4.** A microcomputer which includes a plurality of units operating in synchronism with a first internal clock or a second internal clock depending on operation modes of the microcomputer, the clock rate of the second internal clock being lower than that of the first internal clock, the microcomputer comprising:

a clock generator which receives a first and second external clocks, the clock generator issuing the first and second internal clocks using the first and second external clocks, respectively, in response to a clock selecting signal applied thereto from an external circuit; and

a clock control circuit which precedes at least one of the units, the clock control circuit preventing the second internal clock from being applied to the at least one of the units in response to the clock selecting signal, and allowing the first internal clock to be applied to the at least one of the units in response to the clock selecting signal.

**5.** A microcomputer which operates in synchronism with one of first and second groups of internal clocks depending on operation modes thereof, the clock rate of each of the first group of internal clocks being higher than that of each of the second group of internal clocks, the microcomputer including first and second units wherein the first unit operates in synchronism with the first group of internal clocks while the second unit operates in synchronism with either of the first and second groups of internal clocks, the microcomputer comprising:

a clock generator which receives a clock selecting signal and the first and second external clocks, the clock selecting signal assuming first and second logic levels, the clock generator selecting the first external clock in response to the clock selecting signal assuming the first logic level and issuing the first group of internal clocks, and selecting the second external clock in response to the clock selecting signal assuming the second logic level and issuing the second group of internal clocks; and

a clock control circuit arranged between the clock generator and the first unit, the clock control circuit preventing the second group of internal clocks from being applied to the first unit in response to the clock selecting signal assuming the second logic level, and allowing the first group of internal clocks to be applied to the first unit in response to the clock.

**6.** A microcomputer as claimed in claim 5, wherein the clock control circuit includes:

a NOR gate which receives one of the internal clocks of the first group when the clock selecting signal assumes the first logic level, and the NOR gate receiving one of the internal clocks of the second group when the clock selecting signal assumes the second logic level;

a NAND gate which receives the other of the internal clocks of the first group when the clock selecting signal assumes the first logic level, and the NAND gate receiving the other of the internal clocks of the second group when the clock selecting signal assumes the second logic level;

a first inverter being provided between the output of the NOR gate and the first unit; and

a second inverter being provided between the output of the NAND gate and the first unit.

# FIG.1
## (PRIOR ART)

CLOCK SELECTING SIGNAL  18

MAIN CLOCK  14

SUBCLOCK  16

12

INTERNAL CLOCK GNR

10

INTERNAL CLOCK Φ2

INTERNAL CLOCK Φ1

Φ2
Φ1

CPU  20

SERIAL INTERFACE UNIT  22

DYNAMIC LATCH  26

TIMER UNIT  24

EP 0 481 485 A2

FIG. 2 (PRIOR ART)

MAIN CLOCK 14

SUBCLOCK 16

CLOCK SELECTING SIGNAL 18

φ2

φ1

28 29 30 31 32 33 34 35 36 37 38 39 40

12

FIG. 3

CLOCK SELECTING SIGNAL

MAIN CLOCK 14

SUBCLOCK 16

INTERNAL CLOCK GNR 12

18

100

INTERNAL CLOCK φ1

INTERNAL CLOCK φ2

CLOCK CONTROL CIRCUIT

60

62

CLOCK CONTROL CIRCUIT

INTERNAL CLOCK φ2'

INTERNAL CLOCK φ1'

TIMER UNIT

24

INTERNAL CLOCK φ2'

CPU 20

SERIAL INTERFACE UNIT

22

26

DYNAMIC LATCH

INTERNAL CLOCK φ1'

EP 0 481 485 A2

FIG. 4

60 (62)

INTERNAL
CLOCK $\phi 1$

70

$\phi 1'$

80

18

CLOCK
SELECTING
SIGNAL

78

76

82

$\phi 2'$

INTERNAL
CLOCK $\phi 2$

FIG. 5

MAIN CLOCK
14
16
SUBCLOCK

12
INTERNAL CLOCK GNR

18
CLOCK SELECTING SIGNAL

90
CLOCK CONTROL CIRCUIT

INTERNAL CLOCK φ1

INTERNAL CLOCK φ2

CPU
20

SERIAL INTERFACE UNIT
22

DYNAMIC LATCH
26

TIMER UNIT
24

EP 0 481 485 A2